# EUROPÄISCHE PATENTANMELDUNG

(11) **EP 2 343 488 A2**
(43) Veröffentlichungstag der Anmeldung: **13.07.2011**
(21) Anmeldenummer: 10196369.2
(22) Anmeldetag: 22.12.2010
(51) Int. Cl.: F24J 2/24, F24J 2/46, F24J 2/48, F28F 13/00

(54) **Leitungseinrichtung, Absorbereinrichtung, Solaranlage und Verfahren mit thermischer Gleichrichtung sowie Herstellungsverfahren und Verwendung hierzu**

(30) Priorität: 08.01.2010 DE 102010004196
(71) Anmelder: Robert Bosch GmbH, 70442 Stuttgart (DE)
(72) Erfinder: Ramsteiner, Ingo, 71229, Leonberg (DE)

(57) **Zusammenfassung**

Die Erfindung betrifft eine Leitungseinrichtung, eine Absorbereinrichtung, ein Solarfluid, eine Solaranlage, ein Verfahren zur Erzeugung von Energie aus Solarstrahlung und ein Herstellverfahren mit bzw. für ein Absorberrohr.

Es ist eine Aufgabe der Erfindung eine Leitungseinrichtung, eine Absorbereinrichtung, ein Solarfluid, eine Solaranlage, ein Verfahren zur Erzeugung von Energie aus Solarstrahlung und ein Herstellverfahren zu schaffen, welche ein Einfrieren des Solarfluids verhindern und gleichzeitig einen hohen Wärmetransport von dem Absorber zu dem Solarfluid realisieren.

Gekennzeichnet sind die Leitungseinrichtung, die Absorbereinrichtungen, das Solarfluid, die Solaranlage, das Verfahren zur Erzeugung von Energie aus Solarstrahlung und das Herstellverfahren mit bzw. für ein Absorberrohr dadurch, dass eine thermisch gleichrichtende Beschichtung (2) an einem Leitungsrohr (1) vorgesehen ist bzw. ein Leitungsrohr (1) mit einer thermisch gleichrichtenden Beschichtung (2) beschichtet wird.

## Beschreibung

Die Erfindung betrifft eine Leitungseinrichtung, insbesondere eine Leitungseinrichtung für einen Solarabsorber, nach dem Oberbegriff des Anspruchs 1.

Zudem betrifft die Erfindung eine Absorbereinrichtung, insbesondere eine Solarabsorbereinrichtung, nach Anspruch 5.

Außerdem betrifft die Erfindung ein Solarfluid für eine Solarabsorbereinrichtung mit einer Absorberleitung nach dem Anspruch 6.

Weiter betrifft die Erfindung eine Solaranlage zur Gewinnung von Energie aus Solarstrahlung nach dem Anspruch 7.

Darüber hinaus betrifft die Erfindung ein Verfahren zur verlustarmen Energieerzeugung aus Solarstrahlung nach dem Anspruch 8.

Daneben betrifft die Erfindung ein Herstellungsverfahren für ein Absorberrohr, insbesondere für ein Solarabsorberrohr, nach dem Anspruch 9.

Nicht zuletzt betrifft die Erfindung eine Verwendung einer thermisch gleichrichtenden Beschichtung, insbesondere einer selbstorganisierenden Monolage organischer Moleküle, nach Anspruch 10.

Leitungseinrichtungen, Absorbereinrichtungen, Solarfluide, Solaranlage, Verfahren zur Erzeugung von Energie aus Solarstrahlung und Herstellverfahren sind allgemein aus dem Stand der Technik bekannt. Ein wesentliches Funktionsprinzip einer Solaranlage, wie beispielsweise einer Solarthermieanlage für den Residential-Bereich oder Wohnimmobilienbereich ist, dass ein Kollektor wie zum Beispiel ein Flachkollektor durch Sonneneinstrahlung erwärmt wird. Kernstück eines Kollektors ist dabei der Absorber, meist eine Metallplatte, deren Absorptionseigenschaften durch eine geeignete Beschichtung optimiert sind. Im Wärmekontakt mit dem Absorber befinden sich Leitungsrohre, die beispielsweise als Schlange oder Gitter ausgeformt sind, durch die Solarfluid geleitet wird, das sich dabei erwärmt und so die Energie vom Kollektor in einen Wärmespeicher transportiert. Das Solarfluid ist beispielsweise eine speziell für diesen Zweck geeignete und/oder entwickelte Flüssigkeit. Beispielsweise wird als Solarfluid Wasser verwendet. Die Verwendung von Wasser als Solarfluid bietet beispielsweise Kostenvorteile und geeignete thermische Eigenschaften wie eine hohe Wärmekapazität, wobei der Schmelzpunkt von Wasser mit etwa 0 °C recht hoch ist. An kalten (Winter)Tagen kann so das Wasser und damit auch der Kollektor einfrieren. Neben technisch aufwendigen Lösungen, wie z. B. den Kollektor bei Kälte zu entleeren, liegt es nahe, dem Einfrieren mittels eines aktiven Frostschutzsystems zu begegnen, d. h. bei Bedarf, Wasser mit deutlich über 0 °C durch den Kollektor zu leiten. Ein aktiver Frostschutz benötigt jedoch zusätzliche Energie. Einige Lösungen weisen zur Energieeinsparung eine zusätzliche thermische Isolation der Fluidleitung auf. Diese Isolation bei einem ohnehin auf minimale Wärmeverluste ausgelegten Kollektor ist jedoch nicht zielführend, da ein möglichst isolationsfreier thermischer Kontakt zum Absorber für eine effektive Funktionsweise des Kollektors erforderlich ist.

Der Erfindung liegt die Aufgabe zugrunde, eine Leitungseinrichtung, eine Absorbereinrichtung, ein Solarfluid, eine Solaranlage, ein Verfahren zur Erzeugung von Energie aus Solarstrahlung und ein Herstellverfahren zu schaffen, welche ein Einfrieren des Solarfluids verhindern und gleichzeitig einen hohen Wärmetransport von dem Absorber zu dem Solarfluid realisieren.

Erfindungsgemäß wird dies durch die Gegenstände mit den Merkmalen des Patentanspruches 1, des Patentanspruchs 5, des Patentanspruchs 6, des Patentanspruchs 7, des Patentanspruchs 8, des Patentanspruchs 9 und des und des Patentanspruchs 10 gelöst. Vorteilhafte Weiterbildungen sind den Unteransprüchen zu entnehmen.

Die erfindungsgemäße Leitungseinrichtung, insbesondere eine Leitungseinrichtung für einen Solarabsorber, umfassend mindestens ein Leitungsrohr, das von einem Solarfluid durchströmbar ist, ist dadurch gekennzeichnet, dass das Leitungsrohr zumindest teilweise mit einer thermisch gleichrichtenden Beschichtung beschichtet ist. Unter einer thermisch gleichrichtenden Beschichtung ist im Sinne der vorliegenden Erfindung eine Beschichtung zu verstehen, die abhängig von der umgebenden Temperatur eine Wärmeleitung unterschiedlich regelt. Insbesondere ist unter einer thermisch gleichrichtenden Beschichtung eine Beschichtung zu verstehen, die bei einem positiven Temperaturunterschied zwischen einer Leitungseinrichtung und einem durch die Leitungseinrichtung strömenden Fluid den Wärmetransport zwischen Leitungseinrichtung und Fluid nicht behindert, im umgekehrten Fall aber, wenn das Fluid wärmer als die Leitungseinrichtung oder der Absorber ist, das heißt die Umgebung ist, im Wesentlichen isolierend wirkt. In vorteilhaften Ausgestaltungen wird durch die gleichrichtende Beschichtung ein Gleichrichtereffekt von über 50 % erzielt.

In einer vorteilhaften Ausführungsform der vorliegenden Erfindung ist vorgesehen, dass die Beschichtung als eine Monolage ausgebildet ist. Als Monolage wird eine Schicht bezeichnet, bei welcher die Schichthöhe je nach Material nur ein Atom oder ein Molekül beträgt.

In einer anderen vorteilhaften Ausführungsform der vorliegenden Erfindung ist vorgesehen, dass die Monolage als selbstorganisierende Monolage organischer Moleküle auf einem quarzhaltigen Material ausgebildet ist.

Insbesondere sieht eine weitere Ausführungsform der vorliegenden Erfindung vor, dass die Beschichtung an einer Leitungsrohrinnenseite angeordnet ist. Somit ist die Beschichtung zwischen Leitungsrohr und durch das Leitungsrohr strömendem Solarfluid angeordnet.

Die erfindungsgemäße Absorbereinrichtung, insbesondere eine Solarabsorbereinrichtung, umfassend mindestens einen Solarstrahlung absorbierenden Absorber und mindestens eine Absorberleitung, die in einem wärmeleitenden Kontakt mit dem Absorber steht, ist dadurch gekennzeichnet, dass die Absorberleitung zumindest abschnittsweise als erfindungsgemäße Leitungseinrichtung ausgebildet ist. Entsprechend weist die Absorbereinrichtung zumindest an einem Abschnitt eine thermisch gleichrichtende Beschichtung auf, die einen Wärmetransport oder Wärmeübergang zwischen dem Solarfluid und dem das Solarfluid umgebenden Leitungsrohr regelt.

Das erfindungsgemäße Solarfluid für eine Solarabsorbereinrichtung mit einer Absorberleitung ist dadurch gekennzeichnet, dass das Solarfluid eine Solarfluidkomponente umfasst, die sich bei Benetzung an einer Innenfläche der Absorberleitung in Form einer thermisch gleichrichtenden Beschichtung anlagert. Auf diese Weise kann eine Beschichtung nachträglich in bestehende Leitungsrohrabschnitte eingebracht werden. Zudem ist mit dem erfindungsgemäßen Solarfluid eine einfache Reparatur beschädigter Beschichtungen durchführbar. Das Solarfluid lagert sich dabei in vorteilhaften Ausgestaltungen in einer Monolage ab.

Die erfindungsgemäße Solaranlage zur Gewinnung von Energie aus Solarstrahlung ist dadurch gekennzeichnet, dass mindestens eine erfindungsgemäße Absorbereinrichtung und/oder mindestens eine erfindungsgemäße Leitungseinrichtung vorgesehen ist/sind.

Das Verfahren zur verlustarmen Energieerzeugung aus Solarstrahlung, umfassend die Schritte Übertragen von absorbierter Solarenergie auf ein strömendes Solarfluid mittels thermischen Kontakts, ist dadurch gekennzeichnet, dass die Wärmeübertragung thermisch gleichgerichtet durchgeführt wird. Bei einem positiven Temperaturunterschied zwischen einer Leitungseinrichtung und einem durch die Leitungseinrichtung strömenden Fluid wird der Wärmetransport zwischen Leitungseinrichtung und Fluid nicht behindert, im umgekehrten Fall aber, wenn das Fluid wärmer als die Leitungseinrichtung oder der Absorber, das heißt die Umgebung, ist, wird ein Wärmetransport behindert oder eingeschränkt, sodass eine isolierende Wirkung realisiert wird.

Das erfindungsgemäße Herstellungsverfahren für ein Absorberrohr, insbesondere für ein Solarabsorberrohr, ist dadurch gekennzeichnet, dass eine Oberfläche, insbesondere eine innenliegende Oberfläche, des Absorberrohrs zumindest teilweise mit einer thermisch gleichrichtenden Beschichtung beschichtet wird.

Eine erfindungsgemäße Verwendung einer thermisch gleichrichtenden Beschichtung, insbesondere einer selbstorganisierenden Monolage organischer Moleküle, ist dadurch gekennzeichnet, dass diese zur zumindest teilweisen Beschichtung eines Absorberrohrs, insbesondere eines Solarabsorberrohrs, für einen Solarabsorber verwendet wird.

Mit der erfindungsgemäßen Leitungseinrichtung, der erfindungsgemäßen Absorbereinrichtung, dem erfindungsgemäßen Solarfluid, der erfindungsgemäßen Solaranlage, dem erfindungsgemäßen Verfahren zur Erzeugung von Energie aus Solarstrahlung, dem erfindungsgemäßen Herstellverfahren und der erfindungsgemäßen Verwendung werden insbesondere die folgenden Vorteile realisiert: Ein Gleichrichtereffekt, wie durch die thermisch gleichrichtende Beschichtung realisiert, ermöglicht eine effektive Arbeitsweise einer Solaranlage, bei der ein aktiver Frostschutz überflüssig ist. Der Gleichrichtereffekt bewirkt einen hohen Wärmetransport zwischen Solarfluid und Absorber, auch mit Solarfluiden wie Wasser und anderen Fluiden mit hohen Schmelzpunkten etwa um die 0 °C, wobei ein Einfrieren wirkungsvoll durch eine Isolierfunktion verhindert ist. An einer Grenzschicht zwischen Solarfluid und umgebenden Leitungsrohr ist ein Wärmetransport so wirkungsvoll realisierbar. Beispielsweise ist mit der Erfindung ein Gleichrichtereffekt von über 50 % zu erzielen. In einer Ausführungsform weist das Leitungsrohr eine Beschichtung mit einem Festkörper wie Siliziumdioxid auf. Als Solarfluid ist flüssiges Wasser vorgesehen. Die Beschichtung der Oberfläche des SiO₂ mit einer Monolage wie beispielsweise [-Si(OH)2-(CH2)_{(8 oder 16)}-OH] als thermisch gleichrichtende Beschichtung führt nachweisbar über Computersimulationen zu einem Gleichrichtereffekt von etwa 54 %. Genauer hat sich herausgestellt, dass wenn über die Grenzfläche zwischen Solarfluid und Leitungsrohr eine Temperaturdifferenz von 10 K abfällt, die Wärmeleitung durch die Grenzfläche fast 1.100MW/m²K beträgt, wenn der umgebende Festkörper, also die Leitungseinrichtung, wärmer ist, jedoch weniger als 700MW/m²K beträgt, wenn die Flüssigkeit wärmer ist. Somit lassen sich mit einer innenseitigen Beschichtung einer Fluidleitung im Kollektor mit einer solchen Monolage, insbesondere in einem Frostschutzbetrieb, das heißt bei der Einleitung warmer Flüssigkeit in den Kollektor, die Wärmeverluste an den kalten Absorber minimieren.

Die Zeichnungen stellen ein Ausführungsbeispiel der Erfindung dar und zeigen in den Figuren:
- Fig. 1: schematisch in einer geschnitten Seitenansicht ein erfindungsgemäßes Leitungsrohr,
- Fig. 2: schematisch in einer vergrößerten Darstellung den Aufbau einer thermisch gleichrichtenden Beschichtung und
- Fig. 3: schematisch anhand einer Strukturformel eine erfindungsgemäße Monolage einer thermisch gleichrichtenden Beschichtung.

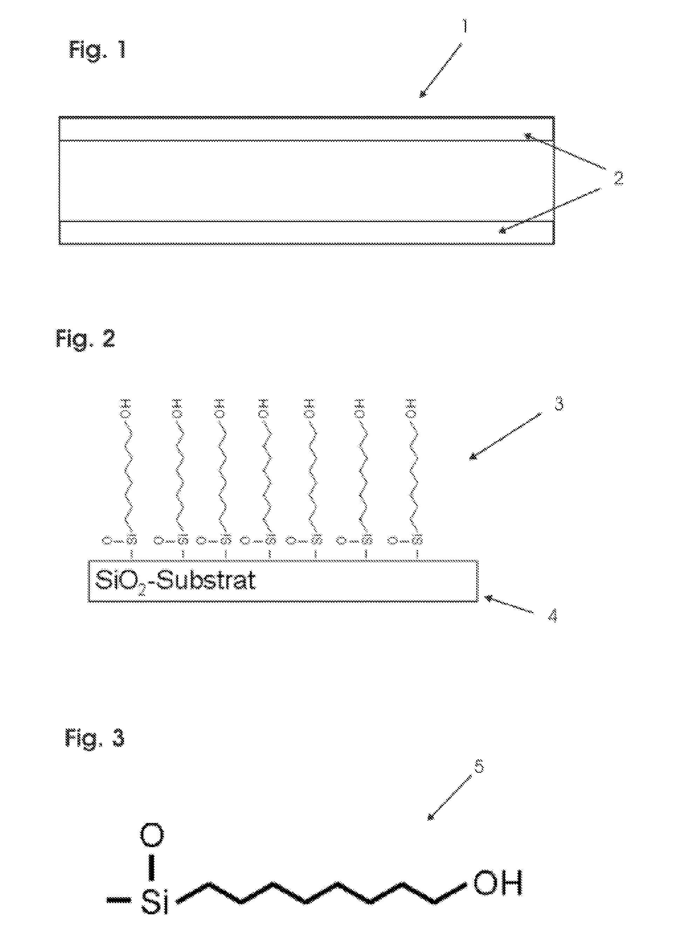

Die Fig. 1 zeigt schematisch in einer geschnitten Seitenansicht ein erfindungsgemäßes Leitungsrohr 1. Das Leitungsrohr 1 ist Teil einer hier nicht dargestellten Leitungseinrichtung für einen Solarabsorber und wird im Einsatz von einem Solarfluid durchströmt. Das Leitungsrohr 1 ist mit einer thermisch gleichrichtenden Beschichtung 2 beschichtet. Die Beschichtung ist an einer Innenseite des Leitungsrohrs 1 angeordnet und bildet eine Grenzschicht zwischen durchströmendem Solarfluid und dem Leitungsrohr 1. Die Beschichtung 2 ist in Fig. 2 detaillierter dargestellt.

Fig. 2 zeigt schematisch in einer vergrößerten Darstellung den Aufbau einer thermisch gleichrichtenden Beschichtung 2. Die thermisch gleichrichtende Beschichtung 2 umfasst ein quarzhaltiges Trägermaterial 4, an welchem eine Monolage ausgebildet ist. Das quarzhaltige Trägermaterial 4 ist als SiO₂-Substrat ausgebildet und kontaktiert die innere Oberfläche des Leitungsrohrs 1 gemäß Fig. 1. Die Monolage ist detaillierter in Fig. 3 dargestellt.

Fig. 3 zeigt schematisch anhand einer Strukturformel eine erfindungsgemäße Monolage 3 einer thermisch gleichrichtenden Beschichtung 2. Die Monolage 3 ist als selbstorganisierende Monolage organischer Moleküle 5 auf einem quarzhaltigen Material ausgebildet. Dabei weist die Monolage 3 zu dem Solarfluid hin.

Die Monolage, die als sogenannter "self assembled monolayer" (SAM), also eine selbstorganisierte Monolage organischer Moleküle auf SiO₂, ausgebildet ist, ist genauer als Tridymit, also einer Hochtemperaturmodifikation von Quarz ausgebildet. Bei den Molekülen handelt es sich um ein Organosilan ([-Si(OH)2-(CH_{2(8 oder 16})-OH]), dessen Struktur in Fig. 3 dargestellt ist. Die Si-Atome gehen Bindungen mit den Sauerstoffatomen des SiO₂-Substrats ein und bilden eine Art ,"Rasen" aus abragenden Kettenmolekülen auf der Oberfläche des Substrats, wie in Fig. 2 gut zu erkennen ist. Für den Gleichrichtereffekt ist das Verhalten der Wechselwirkungen, genauer der Wasserstoffbrücken, zwischen den OH-Gruppen und den Wassermolekülen des Solarfluids verantwortlich. Bei anderen Solarfluiden als Wasser ist eine entsprechende Adaption der Kettenmoleküle erforderlich. Dabei ist die selbstorganisierte Anbindung der organischen Kettenmoleküle an das jeweilige Substrat zu berücksichtigen, damit sich ein dichter Molekülteppich ausbildet. Zudem ist eine Terminierung mit einer Hydroxygruppe (-OH) erforderlich, um den Gleichrichtereffekt zu bewirken. Das Trägermaterial ist inwandig, das heißt an der inneren Oberfläche des Leitungsrohrs 1 als SiO₂-Schicht ausgebildet, die beispielsweise in einem Sol-Gel-Verfahren aufgebracht wird. Auf dem Trägermaterial sind die Moleküle angeordnet. Ein anderes Trägermaterial ist beispielsweise eine A1₂O₃-Schicht, die beispielsweise durch Elektrooxidation einer Aluminiumleitung realisierbar ist. Die Anbindung kann vor einer Erstinbetriebnahme und Montage der Leitungsrohre durchgeführt werden. Abhängig von dem tatsächlich verwendeten Molekül ist die Beschichtung auch als Anlagerung während des Betriebs, insbesondere bei Raumtemperatur durchführbar. Dazu werden bevorzugt die Moleküle dem Solarfluid- oder Wasserkreislauf beigemengt. Beim Durchströmen haften dann die Moleküle an dem Trägermaterial an. Beispielsweise sind so lokale Beschädigungen der Monolagen-Schicht während des Betriebs zu reparieren.

## Patentansprüche

1. Leitungseinrichtung, insbesondere eine Leitungseinrichtung für einen Solarabsorber, umfassend mindestens ein Leitungsrohr (1), das von einem Solarfluid durchströmbar ist, **dadurch gekennzeichnet, dass**
das Leitungsrohr (1) zumindest teilweise mit einer thermisch gleichrichtenden Beschichtung (2) beschichtet ist.

2. Leitungseinrichtung nach Anspruch 1, **dadurch gekennzeichnet, dass** die Beschichtung (2) als eine Monolage (3) ausgebildet ist.

3. Leitungseinrichtung nach Anspruch 1 oder 2, **dadurch gekennzeichnet, dass** die Monolage (3) als selbstorganisierende Monolage organischer Moleküle (5) auf einem quarzhaltigen Material (4) ausgebildet ist.

4. Leitungseinrichtung nach einem der vorherigen Ansprüche 1 bis 3, **dadurch gekennzeichnet, dass**
die Beschichtung (2) an einer Leitungsrohrinnenseite angeordnet ist.

5. Absorbereinrichtung, insbesondere eine Solarabsorbereinrichtung, umfassend mindestens einen Solarstrahlung absorbierenden Absorber und mindestens eine Absorberleitung, die in einem wärmeleitenden Kontakt mit dem Absorber steht, **dadurch gekennzeichnet, dass**
die Absorberleitung zumindest abschnittsweise als Leitungseinrichtung nach einem der vorherigen Ansprüche 1 bis 4 ausgebildet ist.

6. Solarfluid für eine Solarabsorbereinrichtung mit einer Absorberleitung, **dadurch gekennzeichnet, dass**
das Solarfluid eine Solarfluidkomponente umfasst, die sich bei Benetzung an einer Innenfläche der Absorberleitung in Form einer thermisch gleichrichtenden Beschichtung anlagert.

7. Solaranlage zur Gewinnung von Energie aus Solarstrahlung, **dadurch gekennzeichnet, dass**
mindestens eine Absorbereinrichtung nach Anspruch 5 und/oder mindestens eine Leitungseinrichtung nach einem der Ansprüche 1 bis 4 vorgesehen ist.

8. Verfahren zur verlustarmen Energieerzeugung aus Solarstrahlung, umfassend die Schritte
Übertragen von absorbierter Solarenergie auf ein strömendes Solarfluid mittels thermischen Kontakts, **dadurch gekennzeichnet, dass**
die Wärmeübertragung thermisch gleichgerichtet durchgeführt wird.

9. Herstellungsverfahren für ein Absorberrohr, insbesondere für ein Solarabsorberrohr, **dadurch gekennzeichnet, dass**
eine Oberfläche, insbesondere eine innenliegende Oberfläche, des Absorberrohrs zumindest teilweise mit einer thermisch gleichrichtenden Beschichtung (2) beschichtet wird.

10. Verwendung einer thermisch gleichrichtenden Beschichtung (2), insbesondere einer selbstorganisierenden Monolage organischer Moleküle (5), zur zumindest teilweisen Beschichtung eines Absorberrohrs, insbesondere eines Solarabsorberrohrs, für einen Solarabsorber.
